# EUROPÄISCHE PATENTSCHRIFT

(11) **EP 1 157 921 B1**
(45) Veröffentlichungstag und Bekanntmachung des Hinweises auf die Patenterteilung: **30.11.2005**
(21) Anmeldenummer: 01108804.4
(22) Anmeldetag: 07.04.2001
(51) Int. Cl.: B62M 25/04, B62K 23/04

(54) **Integrierter Drehgriffschalter**
Integrated twist-grip gear changer
Poignée tournante pour le changement de vitesse

(30) Priorität: 25.05.2000 DE 10025883
(43) Veröffentlichungstag der Anmeldung: 28.11.2001
(73) Patentinhaber: SRAM Deutschland GmbH, 97404 Schweinfurt (DE)
(72) Erfinder: Wessel, Robert, 97080 Würzburg (DE)

(56) Entgegenhaltungen:
- US-A- 5 660 083
- US-A- 5 802 927
- US-A- 6 021 688

## Beschreibung

Die vorliegende Erfindung betrifft einen integrierten Drehgriffschalter zum Schalten von Fahrradgetrieben, wie Mehrgangnaben oder Kettenschaltungen gemäß dem Oberbegriff des Anspruches 1, wie zum Beispiel in der US-A-5,802,927 gezeigt.

Mit der EP 0700827 ist ein Drehgriffschalter zur Steuerung von Fahrradgetriebe bekannt geworden. Dieser Drehgriffschalter besteht aus einem Schaltergehäuse mit Schaltmechanik, aus einer Klemmvorrichtung zur Fixierung am Lenker, aus einer drehbaren Aufwickelspule, gekoppelt mit einem Lagerrohr für das elastische Drehgriffteil und aus einem drehfest auf dem Lenker sitzenden, ebenfalls elastischem Griffendstück. Das separate Griffendstück ist in der Regel eine Elastomer-Röhre, die reibschlüssig am Lenker angebracht ist und im wesentlichen die Handabstützkräfte auf den Lenker überträgt und nicht beabsichtigte Schaltvorgänge verhindert. Zur Reduzierung der Reibung kann zwischen dem drehbaren Drehgriffteil und der feststehenden Elastomer-Röhre noch ein Kunststoff-Zwischenring angeordnet sein. Die Drehgriff-Funktionseinheit und das separate Griffendstück sowie der Zwischenring werden bei der Endmontage einzeln auf den Lenker aufgesteckt und fixiert, mit entsprechendem Füge- und Justieraufwand.

Da das Griffendstück lediglich über Reibung mit dem Lenker verbunden ist, besteht die nicht unbegründete Gefahr, daß in kritischen Situationen die Hand samt Griffendstück vom Lenker rutscht.

Es ergibt sich somit als Aufgabe für diese Erfindung, einen Drehgriffschalter mit integrierter Befestigung des Griffendstückes zu schaffen, der als Funktionseinheit angeliefert und montiert werden kann. Die Lösung der Aufgabe ist im kennzeichenden Abschnitt des Hauptanspruches beschrieben, weitere Ausgestaltungen werden in den Unteransprüchen aufgezeigt.

Eine weitere Aufgabe besteht in der Erhöhung der Sicherheit bei der Benutzung, indem ein ungewolltes Verschieben des Griffendstückes bis hin zu einem möglichen Abrutschen vom Lenker vermieden wird.

Erfindungsgemäß wird vorgeschlagen, am Lagerrohr in radialer Richtung elastische Zungen anzuordnen, die am Ende mit einem Rastprofil ausgestattet sind um mit dem Gegenprofil am Schaltergehäuse eine verdreh- sowie verschiebesichere formschlüssige Verbindung bilden. Über diese elastischen Zungen können Drehgriffteil und Aufwickelspule sowie das Schaltergehäuse mit der Schaltermechanik zur Vormontage auf das Lagerrohr aufgereiht werden. Dieser Zusammenbau wird durch die Schnappverbindung zwischen Lagerrohr und Schaltergehäuse gegen unbeabsichtigtes Zerlegen gesichert. Dadurch wird die Anzahl der zur Endmontage am Lenker bereitzustellenden und zu montierenden Drehgriffkomponenten deutlich reduziert. Mit der im Innendurchmesser des Schaltergehäuses angeordneten Klemmschelle und der dazugehörigen Schraube ist der komplette Drehgriffschalter einteilig und montagefertig. Wird die Schraube an der Klemmschelle angezogen, so ist ein sicherer Sitz des Drehgriffschalters inklusive Griffendstück am Lenker gewährleistet. Das Lagerrohr bzw. das Drehgriffteil mit der Aufwickelspule kann erst wieder nach dem Entfernen der Klemmschelle demontiert bzw. vom Schaltergehäuse abgekoppelt werden. Zur Gewährleistung eines spielfreien Sitzes am Lenker wird der Innendurchmesser am Lagerrohr und am Griffendstück entsprechend eng bemessen bzw. toleriert. Zur Entschärfung der Toleranzempfindlichkeit kann auch eine gezielte Verformung des Innenbereiches genutzt werden. So kann die Innenfläche des Lagerrohrs in einem Teilbereich, vorzugsweise axial neben den elastischen Zungen, nicht kreisförmig, sondern oval oder polygonal geformt sein, um dann beim Anpassen an den runden Lenkerquerschnitt einen spielfreien Sitz zu erzielen. Der selbe Effekt wird erreicht, wenn dieser Lagerrohr-Innenbereich mit schmalen Erhebungen ausgestattet wird, die im wesentlichen in axialer Richtung verlaufen und sich bei der Montage verformen und dann festsitzen. Es wird auch vorgeschlagen am Lagerrohr im Bereich der Griffendstück-Überdeckung Durchbrüche vorzusehen, damit beim Anbringen des Griffendstückes, Material in den Innendurchmesser des Lagerrohrs hineinragt, um dann bei der Endmontage mit dem Lenker entsprechend verformt und angepreßt zu werden.

Das Lagerrohr ist in Richtung Griffendstück verlängert. Das Griffendstück wird mit einer chemischen Overmolding-Verbindung am Lagerrohr fixiert. Dieses Lagerrohr ist, im Gegensatz zum beschriebenen Stand der Technik, nicht mehr drehfest mit dem elastischen Drehgriffteil und der Aufwickelspule verbunden, sondern dient diesen lediglich als Lagerung und bildet mit einem festen Zwischenring den erforderlichen axialen Anschlag für das drehfest mit der Aufwickelspule verbundene Drehgriffteil.

### Kurzbeschreibung der Zeichnung

Anhand von Zeichnungen wird ein Ausführungsbeispiele zur weiteren Erläuterung der Erfindungsmerkmale gezeigt:
- Fig. 1: zeigt den Längsschnitt durch den kompletten Drehgriffschalter mit den um das Lagerrohr angeordneten Griff- und Schalterkomponenten
- Fig. 2: zeigt eine perspektivische Darstellung des Lagerrohrs mit fester Zwischenscheibe und die mit einem Rastprofil ausgestatteten elastischen Zungen
- Fig. 3: zeigt eine perspektivische Darstellung des Schaltergehäuses mit den Gegenflächen zur Aufnahme des Rastprofils an den elastischen Zungen
- Fig.4: zeigt eine Explosionsdarstellung der Schalterkomponenten vor der Vormontage

### Beschreibung des bevorzugten Ausführungsbeispiels

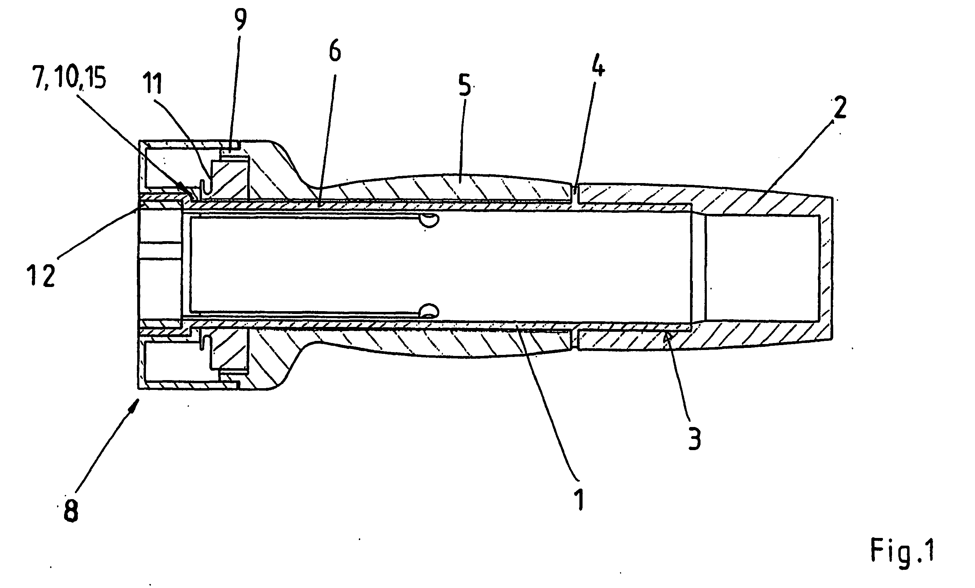

In Fig. 1 wird der Längsschnitt durch den kompletten Drehgriffschalter gezeigt. Die Schalterkomponenten sind im wesentlichen um das Lagerrohr 1 angeordnet. Der Innendurchmesser des Lagerrohrs 1 ist so bemessen, daß ein spielfreier Sitz am Lenker gewährleistet ist. Das aus einem Elastomermaterial bestehende Griffendstück 2 ist mit dem aus Hartkunststoff bestehenden Lagerrohr 1 , vorzugsweise mittels einer Overmolding-Verbindung 3, starr verbunden . Der über das Lagerrohr 1 hinaus ragende Abschnitt des drehfesten Griffendstückes 2 hat einen kleineren Innendurchmesser als das Lagerrohr 1 , damit es spielfrei bzw. mit Spannung am Lenkerende sitzt. Die Außenkontur des Griffendstückes 2 hat zur Verbesserung der gonomie eine leicht ballige Form.

Eine Zwischenscheibe 4 sitzt fest auf dem Lagerrohr 1 bzw. wird mit dem Lagerrohr einstückig hergestellt. Diese Zwischenscheibe 4 dient als axialer Anschlag für das Griffendstück 2 und das Drehgriffteil 5 und reduziert die sonst auftretende axiale Reibung zwischen beiden Griffteilen.

Am Lagerrohr 1 sind zwei in radialer Richtung elastische Zungen 6 mit Rastprofilen 7 angeordnet. Die elastischen Zungen 6 und das Rastprofil 7 können nach innen ausweichen und bilden mit den entsprechenden Gegenprofilen im Schaltergehäuse 8 eine Schnappverbindung 10 . Das Drehgriffteil 5 und die Aufwickelspule 11 können bei der Vormontage über die elastischen Zungen 6 aufgefädelt werden und sind dann gegen ungewolltes Abstreifen gesichert. Die Rastprofile 7 sind im Schaltergehäuse 8 eingeschnappt. Die Klemmschelle 12 wird innerhalb der elastischen Zungen axial in das Gehäuse eingefügt. So ist der Drehgriffschalter, nach einer Endmontage auf dem Lenker und nach dem Anziehen der Schraube (hier nicht gezeigt) an der Klemmschelle 12, gegen Verdrehung oder Verschiebung gesichert. Eine Demontage des Schaltergehäuses 8 und des Drehgriffteils 5 mit der Aufwickelspule 11 ist erst wieder nach Entfernung der Klemmschelle 12 möglich. Der dem Schaltergehäuse 8 zugewandte Rand 9 des Drehgriffteils 5 ragt in das Schaltergehäuse 8 hinein und bildet eventuell auch als Labyrinth ausgebildet eine entsprechende Dichtung. Die Länge und der Innendurchmesser des Drehgriffteils 5 ist so dimensioniert , daß ein leichtgängiges Drehen auf dem Lagerrohr 1 sichergestellt ist. Die Aufwickelspule 11 ist drehfest mit dem Drehgriffteil 5 verbunden bzw. bildet mit dem Drehgriffteil 5 ein gemeinsames Bauteil. Die Außenform des Drehgriffteils 5 ist im Griffbereich ballig geformt oder verfügt über eine, an die Hand angepaßte ergonomische Griffkontur.

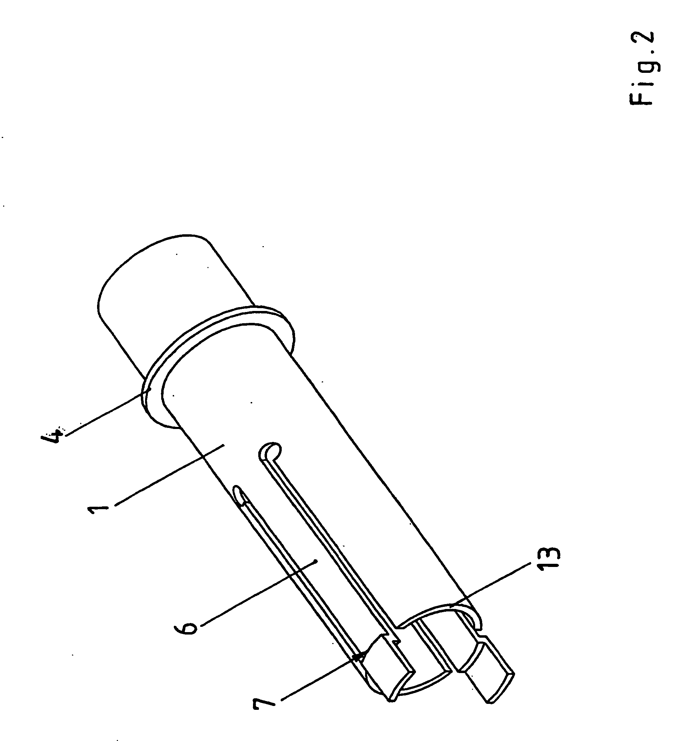

Fig. 2 zeigt eine perspektivische Darstellung des Lagerrohrs 1 mit der integrierten Zwischenscheibe 4 . Der Übergang zu den in radialer Richtung elastischen Zungen 6 ist zur Vermeidung von Kerbwirkung gerundet. Die elastischen Zungen 6 verfügen an ihren Enden über ein Rastprofil 7. In Zugrichtung wird das Lagerrohr 1 mit dem Rastprofil 7 im Schaltergehäuse 8 gehalten. In Schubrichtung stützt sich das Lagerrohr 1 über die Stimflächen 13 am Schaltergehäuse 8 ab.

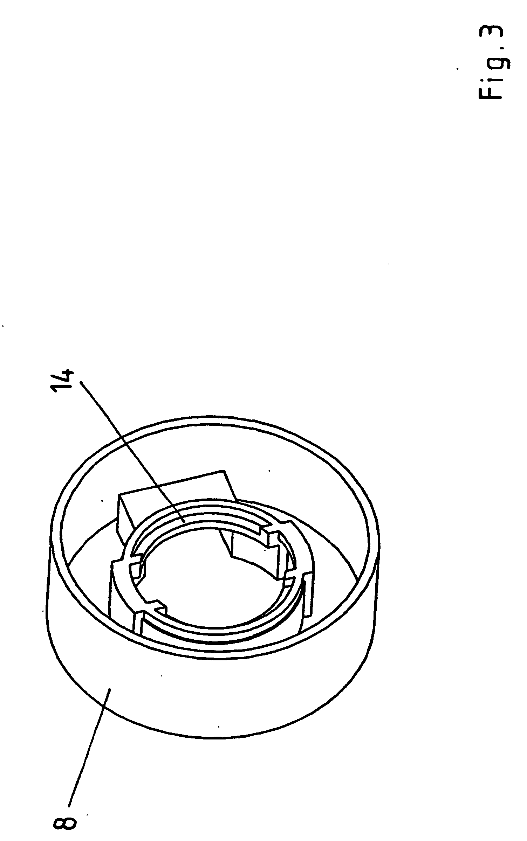

Fig. 3 zeigt eine perspektivische Darstellung des Schaltergehäuses 8 mit dem Anschlag 14 zur Abstützung der Stirnfläche 13 am Lagerrohr 1 . Das Rastprofil 7 an den elastischen Zungen 6 werden vom Gegenprofil 15 aufgenommen. Dadurch wird ein Verdrehen sowie ein Herausziehen des Lagerrohrs im montierten Zustand verhindert und nach Befestigung der Klemmschelle 12 ist eine sichere Fixierung am Lenker gewährleistet.

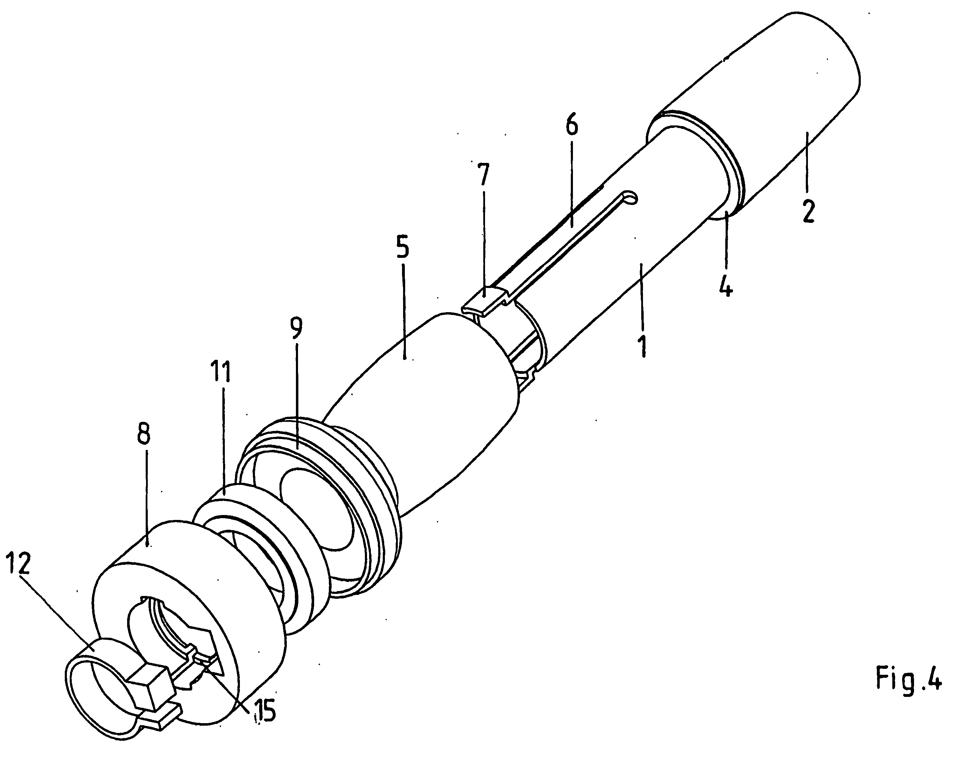

Fig. 4 ist eine Explosionsdarstellung der Schalterkomponenten vor der Montage. Mit dem Lagerrohr 1 ist das Griffendstück 2 bereits starr verbunden. Die elastischen Zungen 6 mit den Rastprofilen 7 werden zusammengedrückt, bis sie durch den Innendurchmesser des Drehgriffteils 5 und der Aufwickelspule 11 passen und in die Ausnehmungen der Gegenprofile 15 am Gehäuse 8 , das die restliche Schaltermechanik beinhaltet, einschnappen. Nach Einlegen der Klemmschelle 12 in das Schaltergehäuse 8 und Anbringen einer hier nicht gezeigten Schraube ist die Vormontage des Drehgriffschalters abgeschlossen er kann somit einteilig am Lenker angebracht werden. Der Schaltzug kann während der Vormontage direkt in die Aufwickelspule oder später durch ein Fenster im Schaltergehäuse 8 eingehängt werden. Der vormontierte Drehgriffschalter bildet eine kompakte Baueinheit und kann ohne ein Entfernen der Klemmschelle 12 und Zusammendrücken der elastischen Zungen 6 nicht demontiert werden.

### Bezugszeichenliste

- 1: Lagerrohr
- 2: Griffendstück
- 3: Overmolding-Verbindung
- 4: Zwischenscheibe
- 5: Drehgriffteil
- 6: Elastische Zunge
- 7: Rastprofil
- 8: Schaltergehäuse
- 9: Rand
- 10: Schnappverbindung
- 11: Aufwickelspule
- 12: Klemmschelle
- 13: Stirnfläche
- 14: Anschlag
- 15: Gegenprofil

## Patentansprüche

1. Integrierter Drehgriffschalter zur Betätigung von Fahrradgetrieben mit einem Schaltergehäuse (8), einer Klemmschelle (12) zur Fixierung des Schaltergehäuses (8) vorzugsweise auf einem Lenkerrohr, einer Aufwickelspule (11) zum Betätigen des Seilzuges und einem rotatorisch zu betätigenden Drehgriffteil (5), einem zentralen Lagerrohr (1),
**dadurch gekennzeichnet,**
**dass** das Lagerrohr (1) mittels einer lösbaren Verbindung mit dem Schaltergehäuse (8) axial unverschiebbar und drehfest verbunden ist und daß diese Verbindung durch die Montage der Klemmschelle (12) so blockiert wird, daß sie ohne Entfernen der Klemmschelle (12) nicht mehr lösbar ist.

2. Integrierter Drehgriffschalter nach Anspruch 1,
**dadurch gekennzeichnet,**
**dass** die formschlüssigen Elemente der lösbaren Verbindung von elastischen Zungen (6) am Lagerrohr (1) mit einer Rastprofil (7) und einem entsprechenden Gegenprofil (15) am Schaltergehäuse (8) gebildet werden.

3. Integrierter Drehgriffschalter nach Anspruch 2,
**dadurch gekennzeichnet,**
**dass** die formschlüssige Verbindung nach dem Einfügen der Klemmschelle (12) in das Schaltergehäuse (8) nicht gelöst werden kann, weil die Klemmschelle (12) radial innerhalb der elastischen Zungen (6) liegt und diese dann nicht mehr nach innen ausweichen können.

4. Integrierter Drehgriffschalter nach Anspruch 2,
**dadurch gekennzeichnet,**
**dass** die formschlüssige Verbindung nach dem Einfügen der Klemmschelle (12) in das Schaltergehäuse (8) nicht gelöst werden kann, weil die Klemmschelle (12) radial außerhalb der elastischen Zungen (6) liegt und diese dann nicht mehr nach außen ausweichen können.

5. Integrierter Drehgriffschalter nach Ansprüchen 2 bis 4,
**dadurch gekennzeichnet,**
**dass** die elastischen Zungen (6) beim Einfügen des Lagerrohres (1) in das Schaltergehäuse (8) infolge ihrer Eigenspannung radial auffedern, wobei das Rastprofil in das Gegenprofil einschnappt.

6. Integrierter Drehgriffschalter nach Ansprüchen 2 bis 4,
**dadurch gekennzeichnet,**
**dass** die elastischen Zungen (6) beim Fügen von Schaltergehäuse (8), Lagerrohr (1) und Klemmschelle (12) in radialer Richtung deformiert werden, wobei das Rastprofil (7) in das Gegenprofil (15) gedrückt wird.

7. Integrierter Drehgriffschalter nach Ansprüchen 2 bis 6,
**dadurch gekennzeichnet,**
**dass** die elastischen Rastzungen (6) des Lagerrohrs (1) die axialen Kräfte in Zugrichtung aufnehmen, während die zwischen den Rastzungen (6) liegenden Rohrsegmente in genauen Aussparungen des Gehäuses (8) zu liegen kommen und so axiale Druckkräfte und rotatorische Kräfte aufnehmen und Relativbewegungen verhindern.

8. Integrierter Drehgriffschalter nach Ansprüchen 1 bis 7,
**dadurch gekennzeichnet,**
**dass** mit Hilfe einer formschlüssigen Verbindung des Lagerrohrs (1) mit dem Schaltergehäuse (8) die Schalterkomponenten wie Drehgriffteil (5), Aufwickelspule (11) und das Schaltergehäuse (8) mit den restlichen Schaltkomponenten zu einer funktionsfähigen Einheit zusammengehalten werden.

9. Integrierter Drehgriffschalter nach Ansprüchen 1 bis 8,
**dadurch gekennzeichnet,**
**dass** am Lagerrohr (1) vor dem Griffendstück (2) eine oder mehrere lose oder fest mit dem Lagerrohr (1) verbundene Zwischenscheiben (4) vorgesehen sind, die dem leichtgängigen Drehgriffteil (5) auf der einen Seite als axialer Anschlag dienen und zudem die Reibung zwischen Griffendstück (2) und Drehgriffteil (5) deutlich reduzieren.

10. Integrierter Drehgriffschalter nach Ansprüchen 1 bis 9,
**dadurch gekennzeichnet,**
**dass** das Drehgriffteil (5) die Aufwickelspule (11) antreibt und diese axial an einem Bund am Schaltergehäuse (8) anläuft, wobei das axiale Spiel des Drehgriffteils (5) durch die Länge des Lagerrohres (1) bzw. von der Länge zwischen Zwischenscheibe (4) und den Rastprofilen am Lagerrohr (1) bestimmt wird.

11. Integrierter Drehgriffschalter nach Anspruch 1 bis 10,
**dadurch gekennzeichnet,**
**dass** das Drehgriffteil (5) und die Aufwickelspule (11) einteilig als eine Einheit ausgeführt sind.

## Claims

1. Integrated twist grip shift for activating bicycle transmissions having a shift housing (8), a clip (12) for securing the shift housing (8) preferably on a handlebar tube, a take-up reel (11) for activating the Bowden cable and a twist grip part (5), which is to be activated in a rotary fashion and a central bearing tube (1), **characterized in that** the bearing tube (1) is connected to the shift housing (8) in an axially non-displaceable and rotationally fixed fashion by means of a releasable connection, and **in that** this connection is blocked by the mounting of the clip (12) in such a way that it can no longer be released without removing the clip (12).

2. Integrated twist grip shift according to Claim 1, **characterized in that** the positively locking elements of the releasable connection are formed by elastic tongues (6) on the bearing tube (1) with a locking profile (7) and a corresponding profile (15) on the shift housing (8).

3. Integrated twist grip shift according to Claim 2, **characterized in that** the positively locking connection cannot be released after the insertion of the clip (12) into the shift housing (8) because the clip (12) lies radially inside the elastic tongues (6) and the latter can then no longer be deflected inwards.

4. Integrated twist grip shift according to Claim 2, **characterized in that** the positively locking connection cannot be released after the insertion of the clip (12) into the shift housing (8) because the clip (12) lies radially outside the elastic tongues (6) and the latter can then no longer be deflected outwards.

5. Integrated twist grip shift according to Claims 2 to 4, **characterized in that** the elastic tongues (6) spring out radially as a result of their intrinsic tension as the bearing tube (1) is inserted into the shift housing (8), the locking profile clipping into the corresponding profile.

6. Integrated twist grip shift according to Claims 2 to 4, **characterized in that** the elastic tongues (6) are deformed in the radial direction as the shift housing (8), bearing tube (1) and clip (12) are assembled, the locking profile (7) being pressed into the corresponding profile (15).

7. Integrated twist grip shift according to Claims 2 to 6, **characterized in that** the elastic locking tongues (6) of the bearing tube (1) absorb the axial forces in the tensile direction, while the tubular segments lying between the locking tongues (6) rest in precise recesses in the housing (8) and thus absorb axial compressive forces and rotary forces and prevent relative movements.

8. Integrated twist grip shift according to Claims 1 to 7, **characterized in that** the shift components such as the twist grip part (5), take-up reel (11) and the shift housing (8) are held together with the remaining shift components by the aid of a positively locking connection of the bearing tube (1) to the shift housing (8) to form one functionally capable unit.

9. Integrated twist grip shift according to Claims 1 to 8, **characterized in that** one or more intermediate discs (4) which are loosely or fixedly connected to the bearing tube (1), serve as an axial stop for the easily moving twist grip part (5) on one side and additionally appreciably reduce the friction between the grip end part (2) and the twist grip part (5) are provided on the bearing tube (1) before the grip end part (2).

10. Integrated twist grip shift according to Claims 1 to 9, **characterized in that** the twist grip part (5) drives the take-up reel (11) and the latter runs axially against a collar on the shift housing (8), the axial play of the twist grip part (5) being determined by the length of the bearing tube (1) or the length between the intermediate disc (4) and the locking profiles on the bearing tube (1).

11. Integrated twist grip shift according to Claims 1 to 10, **characterized in that** the twist grip part (5) and the take-up reel (11) are embodied integrally as one unit.

## Revendications

1. Poignée tournante intégrée pour le changement de vitesses, pour l'actionnement de transmissions de bicyclettes, comprenant un boîtier de poignée (8), un collier de serrage (12) pour la fixation du boîtier de poignée (8) de préférence sur un tube de guidon, une bobine d'enroulement (11) pour l'actionnement du câble de traction, une partie de poignée tournante (5) actionnée par rotation et un tube de support central (1),
**caractérisée en ce que**
le tube de support (1) est connecté de manière fixe en rotation et non déplaçable axialement au boîtier de poignée (8) au moyen d'une connexion desserrable, et **en ce que** cette connexion est bloquée par le montage du collier de serrage (12) de telle sorte qu'elle ne puisse plus être desserrée sans enlever le collier de serrage (12).

2. Poignée tournante intégrée pour le changement de vitesses selon la revendication 1,
**caractérisée en ce que**
les éléments de la connexion desserrable à engagement positif sont formés par des langues élastiques (6) sur le tube de support (1) avec un profilé d'encliquetage (7) et un profilé conjugué correspondant (15) sur le boîtier de poignée (8).

3. Poignée tournante intégrée pour le changement de vitesses selon la revendication 2,
**caractérisée en ce que**
la connexion par engagement positif ne peut pas être desserrée après l'insertion du collier de serrage (12) dans le boîtier de poignée (8), parce que le collier de serrage (12) s'applique radialement à l'intérieur des langues élastiques (6) et celles-ci ne peuvent alors plus s'écarter vers l'intérieur.

4. Poignée tournante intégrée pour le changement de vitesses selon la revendication 2,
**caractérisée en ce que**
la connexion par engagement positif ne peut pas être desserrée après l'insertion du collier de serrage (12) dans le boîtier de poignée (8), parce que le collier de serrage (12) s'applique radialement à l'extérieur des langues élastiques (6) et celles-ci ne peuvent alors plus s'écarter vers l'extérieur.

5. Poignée tournante intégrée pour le changement de vitesses selon les revendications 2 à 4,
**caractérisée en ce que**
les langues élastiques (6) lors de l'insertion du tube de support (1) dans le boîtier de poignée (8), s'élargissent élastiquement radialement du fait de leur tension propre, le profilé d'encliquetage s'encliquetant dans le profilé conjugué.

6. Poignée tournante intégrée pour le changement de vitesses selon les revendications 2 à 4,
**caractérisée en ce que**
les langues élastiques (6) lors de l'assemblage du boîtier de poignée (8), du tube de support (1) et du collier de serrage (12) sont déformées dans la direction radiale, le profilé d'encliquetage (7) étant pressé dans le profilé conjugué (15).

7. Poignée tournante intégrée pour le changement de vitesses selon les revendications 2 à 6,
**caractérisée en ce que**
les langues d'encliquetage élastiques (6) du tube de support (1) reçoivent les forces axiales dans la direction de traction, tandis que les segments de tube se trouvant entre les langues d'encliquetage (6) viennent se placer dans des évidements précis du boîtier (8) et reçoivent ainsi les forces de pression axiales et les forces de rotation et empêchent les mouvements relatifs.

8. Poignée tournante intégrée pour le changement de vitesses selon les revendications 1 à 7,
**caractérisée en ce que**
les composants de la poignée tels que la partie de poignée tournante (5), la bobine d'enroulement (11) et le boîtier de poignée (8) sont maintenus avec les autres composants de la poignée pour former une unité fonctionnelle au moyen d'une connexion par engagement positif du tube de support (1) au boîtier de poignée (8).

9. Poignée tournante intégrée pour le changement de vitesses selon les revendications 1 à 8,
**caractérisée en ce que**
l'on prévoit sur le tube de support (1) avant le bout de la poignée (2), un ou plusieurs disques intermédiaires (4) connectés lâchement ou fixement au tube de support (1), qui servent de butée axiale à la partie de poignée rotative libre (5) d'un côté et qui réduisent en outre nettement le frottement entre le bout de la poignée (2) et la partie de poignée rotative (5).

10. Poignée tournante intégrée pour le changement de vitesses selon les revendications 1 à 9,
**caractérisée en ce que**
la partie de poignée tournante (5) entraîne la bobine d'enroulement (11) et celle-ci vient buter axialement contre un épaulement sur le boîtier de poignée (8), le jeu axial de la partie de poignée tournante (5) étant déterminé par la longueur du tube de support (1) ou par la longueur entre le disque intermédiaire (4) et les profilés d'encliquetage sur le tube de support (1).

11. Poignée tournante intégrée pour le changement de vitesses selon les revendications 1 à 10,
**caractérisée en ce que**
la partie de poignée tournante (5) et la bobine d'enroulement (11) sont réalisées d'une seule pièce sous forme d'unité.
